# EUROPÄISCHE PATENTSCHRIFT

(11) **EP 3 099 873 B1**
(45) Veröffentlichungstag und Bekanntmachung des Hinweises auf die Patenterteilung: **02.01.2019**
(21) Anmeldenummer: 15716399.9
(22) Anmeldetag: 02.02.2015
(51) Int. Cl.: E05B 81/20, E05B 77/08, E05B 81/14, E05B 83/24

(54) **VERFAHREN FÜR EIN SCHLIESSEN EINER KRAFTFAHRZEUGHAUBE**
METHOD FOR CLOSING A MOTOR VEHICLE HOOD
PROCÉDÉ DE FERMETURE D'UN CAPOT DE VÉHICULE AUTOMOBILE

(30) Priorität: 31.01.2014 DE 102014201808
(43) Veröffentlichungstag der Anmeldung: 07.12.2016
(73) Patentinhaber: Kiekert AG, 42579 Heiligenhaus (DE)
(72) Erfinder: SCHOLZ, Michael, 45136 Essen (DE); SCHIFFER, Holger, 40668 Meerbusch (DE); INAN, Ömar, 46282 Dorsten (DE); HÜLSMANN, Thomas, 85296 Rohrbach a.d. Ilm (DE)
(86) Internationale Anmeldenummer: PCT/DE2015/000034
(87) Internationale Veröffentlichungsnummer: WO 2015/113546

(56) Entgegenhaltungen:
- WO-A1-2015/096830
- DE-A1-102006 026 282
- JP-U- S5 299 211
- US-A- 2 508 090
- US-A1- 2013 300 134

## Beschreibung

Die Erfindung betrifft Verfahren für ein Schließen einer Haube eines Kraftfahrzeugs mit einer Schließvorrichtung mit einem Gesperre umfassend eine Drehfalle und wenigstens eine Sperrklinke für ein Verrasten der Drehfalle. Die Schließvorrichtung umfasst einen Antrieb, mit dem das Gesperre so bewegt werden kann, dass ein Spalt zwischen Haube und angrenzender Karosserie minimiert werden kann.

Eine Schließvorrichtung der eingangs genannten Art dient zum zeitweisen Verschließen von Öffnungen in Kraftfahrzeugen oder Gebäuden mit Hilfe von Türen oder Klappen. Im geschlossenen Zustand einer solchen Schließvorrichtung greift die Drehfalle mit zwei Armen (Lastarm sowie Fangarm genannt) um einen insbesondere bügelförmig ausgeführten Schließbolzen herum. Der Schließbolzen kann im Fall eines Kraftfahrzeugs an einer Tür oder Klappe des Kraftfahrzeugs befestigt sein und dann das Gesperre an der Karosserie oder umgekehrt. Die vorliegende Erfindung ist besonders vorteilhaft für Fronthauben bzw. Frontklappen, die sich in üblicher Fahrtrichtung eines Kraftfahrzeugs gesehen vorne befinden.

Im Rahmen der Erfindung ist das Gesperre regelmäßig karosserieseitig angebracht, findet sich also an einer zugehörigen Kraftfahrzeugkarosserie. Demgegenüber ist der Schließbolzen an eine Haube angeschlossen.

Erreicht die Drehfalle eines solchen Schlosses bzw. Schließvorrichtung ausgehend von einer geöffneten Stellung durch Verschwenken eine Schließstellung, so wird die Drehfalle schließlich mittels der Sperrklinke verrastet. Ein solches Verschwenken wird durch den Schließbolzen (auch "Schlosshalter" genannt) erreicht, wenn dieser durch ein Schließen einer zugehörigen Klappe bzw. Haube in die Drehfalle einfällt. Eine Sperrfläche der Sperrklinke liegt im verrasteten Zustand an einer Sperrfläche der Drehfalle an, wodurch verhindert wird, dass die Drehfalle in Richtung geöffnete Stellung zurückgedreht werden kann. Der Schließbolzen kann das Gesperre in der Schließstellung nicht mehr verlassen.

Für ein Öffnen ist es erforderlich, die Sperrklinke aus ihrer Raststellung heraus zu bewegen. Ist die Sperrklinke aus ihrer Raststellung heraus bewegt worden, so dreht sich die Drehfalle in Richtung geöffnete Stellung. In der geöffneten Stellung der Drehfalle und damit in der geöffneten Stellung des Gesperres kann der Schließbolzen das Schloss bzw. die Schließvorrichtung verlassen. Die Tür oder Klappe kann so wieder geöffnet werden.

Es gibt Gesperre mit zwei verschiedenen Raststellungen der Drehfalle. Die Drehfalle kann dann zunächst in der sogenannten Vorrastposition verrastet werden und durch ein Weiterdrehen in Schließrichtung schließlich in der sogenannten Hauptrastposition.

Die DE 10 2008 005 181 A1 beschreibt eine Schließhilfe zum Heranziehen einer Klappe oder einer Tür eines Fahrzeugs an die Fahrzeugkarosserie. Der hieraus bekannte Antrieb dient auch dem Öffnen der Tür oder Klappe. Ein kombiniertes Zuziehen und ein elektrisches Öffnen eines Heckklappenschlosses geht aus den Druckschriften DE 100 33 092 A1, DE 10 2004 011 798 B3 sowie DE 10 2004 013 671 A1 hervor.

Um ein Gesperre öffnen zu können, gibt es eine Betätigungseinrichtung. Wird die Betätigungseinrichtung betätigt, so öffnet sich das Gesperre. Ein Griff einer Tür oder einer Klappe kann Teil der Betätigungseinrichtung sein. Dieser Griff wird in der Regel über ein Gestänge oder einen Bowdenzug mit einem Betätigungshebel des Schlosses bzw. der Schließvorrichtung verbunden. Wird der Griff betätigt, so wird mittels des Gestänges oder des Bowdenzugs der Betätigungshebel des Schlosses so verschwenkt, dass sich das Schloss öffnet. Ein Kraftfahrzeug kann einen in der Regel schwenkbaren Außengriff, der von außen erreichbar ist, und/oder einen in der Regel schwenkbaren Innengriff, der von innen erreichbar ist, aufweisen.

Wird ein Gesperre eines Kraftfahrzeugs durch Schließen einer Tür oder Klappe verrastet, so verbleibt grundsätzlich zwischen der Tür bzw. Klappe und der angrenzenden Karosserie ein Spalt. Ein solcher Spalt soll vor allem bei Hauben, die sich in üblicher Fahrtrichtung gesehen vorne befinden, so gering wie möglich sein, um nachteilhafte Luftverwirbelungen im Frontbereich und damit einhergehende Luftwiderstände während einer Fahrt zu vermeiden. Eine möglichst spaltfreie, geschlossene Oberfläche ist aber auch aus optischen Gründen erwünscht.

Die deutsche Voranmeldung DE 10 2013 109 051 befasst sich mit einer Minimierung von derartigen Spalten bei Türen oder Klappen. Das hieraus bekannte Schloss ist beweglich und zwar insbesondere schwenkbar gelagert. Im Anschluss an ein Verrasten des Gesperres wird das Schloss durch einen Antrieb insgesamt so bewegt bzw. verschwenkt, dass ein Spalt zwischen Tür bzw. Klappe und Karosserie minimiert wird. Der dafür vorgesehene Antrieb umfasst einen Elektromotor und einen verschwenkbaren Hebel, der Schwinge genannt wird. Durch Verschwenken des Hebels bzw. der Schwinge (nachfolgend auch "Schwinghebel" genannt) durch den Elektromotor wird das Schloss insgesamt so verschwenkt, dass der Spalt minimiert wird. Dabei wird das Schlossgehäuse durch eine Klinke gehalten, die an der Schwinge drehbar angebracht ist.

Die Voranmeldung WO 2015 096 830 A1 beschreibt eine Schließvorrichtung für eine Klappe eines Kraftfahrzeugs sowie ein Verfahren für ein Schließen der Schließvorrichtung gemäß dem Oberbegriff des Anspruchs 1. Diese Schließvorrichtung weist ein Schloss, umfassend ein Gesperre aus Drehfalle 1 und Sperrklinke 2 für ein Verrasten der Drehfalle 1, und einen Antrieb 6 auf, mit dem das Gesperre ganz oder teilweise so bewegt werden kann, dass ein Haubenspalt 29 verkleinert werden kann. Der Antrieb ist eine Zuziehhilfe. Die Schließvorrichtung umfasst einen an einer Platte 14 angebrachtem Anschlag 20 für ein Übertragen einer Last in die Platte 14, die durch Einfallen eines Schließbolzens 18 in die Drehfalle 1 bewirkt wird. Die Schließvorrichtung ist so beschaffen, dass die Drehfalle 1 durch die Sperrklinke 2 in einer Vorrastposition oder in einer Hauptrastposition verrastet wird, bevor die Last in den Anschlag 20 eingeleitet wird. Eine Schlossplatte 3 ist an der Platte 14 drehbar gelagert. Drehfalle 1 und Sperrklinke 2 sind an der Schlossplatte 3 drehbar befestigt. Ein durch den Antrieb 6 bewegbarer Schwinghebel 13 ist über eine gemeinsame Achse 5 mit der Schlossplatte 3 drehfest verbunden. Die Schlossplatte 3 erstreckt sich von der gemeinsamen Achse aus gesehen in die gleiche Richtung wie der Schwinghebel 13. Der Schwinghebel 13 erstreckt sich von der gemeinsamen Achse 5 aus gesehen über den Einlaufbereich der Schlossplatte 3 hinaus. Der Anschlag 20 ist drehbar an der Platte 14 gelagert. Der Antrieb 6 vermag den Anschlag 20 zu bewegen. Die Figur 6 dieses Dokuments verdeutlicht die Situation im Anschluss an ein Einfallen des Schließbolzens 18 in das Schloss. Ein Arm der Drehfalle 1, und zwar der sogenannte Lastarm, liegt auf dem Anschlag 20 auf. Die Drehfalle 1 ist durch die Sperrklinke 2 verrastet worden und befindet sich in der Hauptrast. Es verbleibt ein Spalt 29 zwischen der Haube 19 und der Karosserie 17 des Kraftfahrzeugs. Um den Spalt 29 nun ausgehend von der Hauptrastposition des Gesperres weiter zu verkleinern, wird mithilfe des Antriebs 6 der Anschlag 20 durch Verschwenken im Uhrzeigersinn zunächst aus seiner Anschlagsposition heraus bewegt. Ist der Anschlag 20 aus seiner Anschlagsposition heraus bewegt worden, so kann nun mithilfe des Antriebs 6 der Schwinghebel 13 und damit auch die Schlossplatte 3 im Uhrzeigersinn um ihre Achse 5 verschwenkt werden, um so den Spalt 29 weiter zu verkleinern, um schließlich, wie in Figur 8 dieses Dokuments gezeigt, einen spaltfreien Kontakt zwischen Motorhaube 19 und Karosserie 17 an der Frontseite herzustellen. Dann wird der Antrieb 6 gestoppt.

Bei diesem bekannten Verfahren wird also beim Schließen der Motorhaube 19 zunächst die Drehfalle 1 durch die Sperrklinke 2 verrastet, dann wird mithilfe des Antriebs 6 der Haubenspalt 29 verkleinert, und schließlich wird der Antrieb 6 gestoppt

Die DE 10 2006 026 282 A1 beschreibt einen Drehfallenverschluss für eine Frontklappe mit einer in einer Verriegelungsstellung, von einer Sperrklinke gehaltenen Drehfalle. Die Drehfalle verschwenkt bei ihrer Verlagerung von der Offenstellung in die Verriegelungsstellung die Sperrklinke derart, dass ein Begrenzungsfortsatz in die Bewegungsbahn einer Anschlagschulter der Drehfalle gesteuert wird.

Es ist Aufgabe der Erfindung, ein Verfahren anzugeben, mit dem ein Spalt einer Klappe minimiert werden kann und Verletzungsrisiken gering gehalten werden können.

Zur Lösung der Aufgabe umfasst ein Verfahren die Merkmale des Anspruchs 1. Vorteilhafte Ausgestaltungen ergeben sich aus den abhängigen Ansprüchen. Die Erfindung schlägt ein Verfahren für ein Schließen einer Haube eines Kraftfahrzeugs, das eine Schließvorrichtung für die Haube mit einem Schließbolzen und einem Gesperre aus Drehfalle und Sperrklinke umfasst, vor, mit den Schritten, dass:
- die geöffnete Haube in Richtung geschlossene Stellung bewegt wird;
- durch dieses Bewegen der Haube der Schließbolzen die Drehfalle um ihre Achse in Richtung ihrer Rastposition verschwenkt, bis die Drehfalle auf einen Durchschlagsschutz, insbesondere einen Abfanghebel, auftrifft;
- nach diesem Auftreffen die Haube oder die Drehfalle zusammen mit der Haube unter Einsatz eines Antriebs, insbesondere unter Einsatz eines elektrischen Antriebs, derart bewegt wird, dass der Haubenspalt zwischen Haube und Karosserie des Kraftfahrzeugs verringert wird;
- die Drehfalle durch die Sperrklinke verrastet wird;
- nach diesem Bewegen durch den Antrieb der Antrieb stoppt;
- das Verrasten der Drehfalle im Anschluss an dieses Bewegen durch den Antrieb erfolgt;
- nach dem Stoppen des Antriebs mit zeitlicher Verzögerung die Drehfalle durch die Sperrklinke verrastet wird.

Die geöffnete Haube wird in Richtung geschlossene Stellung bewegt. Dies kann manuell geschehen, aber auch durch einen Antrieb, so zum Beispiel durch einen elektrischen Antrieb. Der Schließbolzen der Schließvorrichtung verschwenkt schließlich durch das Bewegen der Haube die Drehfalle der Schließvorrichtung um ihre Achse in Richtung ihrer Rastposition, bis die Drehfalle und zwar insbesondere der Lastarm der Drehfalle auf einen Abfanghebel auftrifft, also die Drehfalle von dem Abfanghebel abgefangen und so einem Weiterdrehen gehindert wird.

Vorzugsweise trifft der Lastarm auf, also der Arm, der den Schließbolzen in der verrasteten Stellung des Gesperres unmittelbar daran hindert, das Gesperre zu verlassen. Hierdurch wird einerseits erreicht, dass die Drehfalle geeignet weit gedreht werden kann. Auf der anderen Seite ist der Lastarm grundsätzlich so ausgelegt und dimensioniert, dass er hohen Belastungen gewachsen ist. Dieser ist daher auch einem Aufprall auf den Abfanghebel gewachsen.

Das Bewegen der Haube in Richtung geschlossene Stellung kann in einer Ausführungsform von einem Sensor, so zum Beispiel von einem Mikroschalter erkannt werden, was bewirkt, dass der Abfanghebel in seine abfangende Stellung bewegt wird, um die Drehbewegung der Drehfalle abfangen, also stoppen zu können. Alternativ kann das Öffnen der Haube durch einen Sensor, beispielsweise einen Mikroschalter, erkannt werden, was bewirkt, dass der Abfanghebel in seine abfangende Stellung bewegt wird. Alternativ kann der Abfanghebel im Rahmen des Öffnens der Haube in seine abfangende Stellung bewegt worden sein.

In den Abfanghebel werden Kräfte eingeleitet, die durch das Schließen der Haube verursacht werden. Es können so mechanisch empfindliche Komponenten der Schließvorrichtung und zwar insbesondere ein Antrieb der Schließvorrichtung vor solchen Kräften und damit vor Beschädigungen geschützt werden. Der Abfanghebel kann beispielsweise unmittelbar an der Karosserie angebracht sein. Er kann aber auch an einer mechanisch belastbaren Komponente der Schließvorrichtung angebracht sein, die wiederum unmittelbar oder aber über ein oder mehrere mechanisch belastbare Komponenten solche Kräfte in die Karosserie abzuleiten vermag. Insbesondere kann der Abfanghebel an einer Schwinge angebracht sein, an der auch Drehfalle und/oder Sperrklinke angebracht sind.

Der Abfanghebel wirkt als Durchschlagsschutz und schützt vor übermäßigen Kräften, wenn die Haube anfänglich mit hoher Geschwindigkeit geschlossen wird. Der Durchschlagsschutz, also der Abfanghebel, ermöglicht es, dass die Schließvorrichtung selbst durch Schließgeschwindigkeiten der Haube von 3 m/s nicht beschädigt wird.

In einer Ausgestaltung beträgt der Haubenspalt im Anschluss an das Abfangen 10 mm bis 30 mm, vorzugsweise mindestens 15 mm. Es verbleibt damit bis zum Abfangen ein hinreichend großer Spalt, der vermeidet, dass Finger im Spalt durch ein Zuschlagen der Haube stark gequetscht werden können. Durch das Abfangen können also sowohl Beschädigungen der Schließvorrichtung vermieden werden als auch Verletzungsrisiken vermindert werden.

Ist die Drehfalle durch den Abfanghebel abgefangen und ihre Drehbewegung gestoppt worden, so wird die Haube oder die Drehfalle zusammen mit der Haube durch einen Antrieb bzw. unter Einsatz eines Antriebs, insbesondere durch einen elektrischen Antrieb, derart bewegt, dass ein Haubenspalt zwischen Haube und Karosserie des Kraftfahrzeugs verringert wird. Dies geschieht insbesondere mit begrenzter Kraft, die geringer ist als die Kraft, die durch den Antrieb bereitgestellt werden kann. Es wird so vermieden, dass ein im Haubenspalt befindlicher Finger mit großer Kraft gequetscht werden kann. Vorzugsweise wird durch das Bewegen Haube bzw. der Drehfalle zusammen mit der Haube die Haube in dieser Phase lediglich durch Schwerkraft in Richtung Karosserie bewegt, was vor allem dann möglich ist, wenn die Drehfalle noch nicht verrastet worden ist und/oder das Bewegen der Drehfalle ebenfalls allein auf Schwerkraft beruht. Der Antrieb stellt dann also nicht die Kraft bereit, die für ein Bewegen der Haube oder für ein Bewegen der Haube zusammen mit der Drehfalle aufzuwenden ist. Ein Finger im Haubenspalt kann bei dieser Ausführungsform nur leicht gequetscht werden. Verletzungsrisiken sind daher gering. Der Haubenspalt kann sich so beispielsweise von 15 mm auf 7 mm verkleinert haben.

In einer technisch einfachen Ausführungsform wird die Drehfalle mittels einer Schwinge in vorgenannter Weise bewegt. Die Drehfalle ist dann mittelbar oder unmittelbar mit der Schwinge verbunden. Insbesondere ist die Drehfalle durch eine Achse drehbar an der Schwinge befestigt. Ein Verschwenken der Schwinge hat dann ein Bewegen der Drehfalle zur Folge.

Alternativ oder ergänzend kann in einer Ausgestaltung kann zunächst der Abfanghebel aus seiner abfangenden Stellung durch den Antrieb wegbewegt worden sein, um eine Fortsetzung der Drehbewegung der Drehfalle in Richtung ihrer Raststellung zu ermöglichen und um so eine Spaltverringerung herbeizuführen. Die Fortsetzung der Drehbewegung der Drehfalle kann auf Schwerkraft beruhen und zwar insbesondere aufgrund der Schwerkraft der Haube, ohne dass ein Antrieb die Drehfalle verdreht. Der Haubenspalt kann sich auch auf diese Weise beispielsweise von 15 mm auf 7 mm verkleinert haben und zwar insbesondere auch kraftbegrenzt.

Das vorzugsweise kraftbegrenzte Verringern des Haubenspalts durch Bewegen der Drehfalle mittels Antrieb bewirkt insbesondere, dass der Haubenspalt im Anschluss an das Bewegen maximal 10 mm, vorzugsweise maximal 8 oder 7 mm beträgt. Der Haubenspalt ist dann hinreichend klein, so dass Finger regelmäßig nicht mehr in den Haubenspalt hinein gelangen können. Der Haubenspalt kann unmittelbar vor dem vorzugsweise kraftbegrenzten Bewegen der Haube 12 mm bis 25 mm betragen haben, so zum Beispiel 15 mm. Der Haubenspalt ist damit vor dem vorzugsweise kraftbegrenzten Bewegen zwar schon klein, aber nicht hinreichend klein, um zu vermeiden, dass Finger regelmäßig in den Haubenspalt gelangen können. Durch das vorzugsweise kraftbegrenzte Bewegen wird der Haubenspalt um mehrere Millimeter verkleinert und zwar vorzugsweise um wenigstens 2 mm, besonders bevorzugt um wenigstens 5 mm. Im Anschluss daran ist der Haubenspalt insbesondere derart klein, dass Finger regelmäßig nicht mehr in den Haubenspalt hinein geschoben werden können.

Die Drehfalle wird durch Verschwenken der Sperrklinke in ihre Rastposition verrastet und zwar aus vorgenannten Gründen insbesondere erst im Anschluss an das vorzugsweise kraftbegrenzte Absenken. Die Sperrklinke kann durch Federkraft und/oder durch Bewegen einer dafür vorgesehenen Mechanik wie zum Beispiel einem Gestänge in ihre Raststellung hinein bewegt werden. Die Mechanik kann durch einen Antrieb, insbesondere einen elektrischen Antrieb, bewegt werden. Das Verrasten der Drehfalle kann durch einen Sensor, so zum Beispiel einen Mikroschalter, aktiviert werden, sobald der Sensor erkannt hat, dass die Drehfalle und / oder die Haube durch einen Antrieb kraftbegrenzt bewegt worden ist. Eine solche Bewegung ist insbesondere eine Absenkbewegung, um ein Bewegen durch Schwerkraft zu ermöglichen.

Nachdem die Drehfalle und / oder die Haube durch einen Antrieb vorzugsweise kraftbegrenzt bewegt worden sind und bevor die Drehfalle verrastet wird, wird vorzugsweise eine Pause von zum Beispiel wenigstens 0,5 Sekunden, also zum Beispiel 0,5 Sekunden bis 2 Sekunden, eingelegt. Es wird so verbessert sichergestellt, dass sich der Haubenspalt planmäßig derart verkleinert, dass kein Finger in diesen hineingelangen kann. Der Antrieb, der das vorzugsweise kraftbegrenzte Bewegen bewirkt hat, ist zu diesem Zweck im Anschluss an das kraftbegrenzte Bewegen gestoppt worden und zwar vorzugsweise für wenigstens 0,5 Sekunden und kann im Anschluss daran mit entsprechender zeitlicher Verzögerung wieder aktiviert werden, um zu bewirken, dass die Drehfalle verrastet wird. In einer Ausgestaltung kann die Aktivierung des Antriebs im Anschluss an die Pause bzw. zeitliche Verzögerung aber auch bewirken, dass dadurch der Haubenspalt zunächst weiter geringfügig, so zum Beispiel nochmals um 0,5 bis 2 mm, verkleinert wird und zwar insbesondere wiederum kraftbegrenzt im vorgenannten Sinn. Erst im Anschluss daran wird die Drehfalle verrastet. Durch diese Ausgestaltung wird weiter verbessert erreicht, dass eine Haube planmäßig geschlossen werden kann und Verletzungsrisiken gering sind.

Start- und Stoppsignale für den Antrieb können wiederum von ein oder mehrere Sensoren wie zum Beispiel Mikroschalter stammen, die die Stellung von dafür geeigneten Komponenten detektieren.

In einer Ausgestaltung wird der Abfanghebel im Anschluss an das Verrasten der Drehfalle aus seiner abfangenden Position herausgeschwenkt. Dies ist zunächst mit dem Vorteil verbunden, dass dann die Drehfalle in eine Überhubposition geschwenkt werden kann, also weiter von ihrer geöffneten Stellung weggeschwenkt werden kann. Die Haube bleibt damit zumindest im Bereich ihrer Schließvorrichtung vorteilhaft nachgiebig. Dies verringert Verletzungsrisiken für Personen, die auf eine geschlossene Haube fallen.

In einer Ausführungsform der Erfindung wird im Anschluss an das Herausschwenken des Abfanghebels die Drehfalle durch einen Antrieb und vorzugsweise mittels der Schwinge derart bewegt, dass der Haubenspalt weiter verringert wird und zwar vorzugsweise um wenigstens 3 mm, besonders bevorzugt um wenigstens 5 mm. Dies geschieht insbesondere nicht kraftbegrenzt. Mit "nicht kraftbegrenzt" ist gemeint, dass die Drehfalle und damit die Haube mit der Kraft weiter bewegt werden kann, die vom Antrieb bereitgestellt wird. Die für das Bewegen der Haube verantwortliche Kraft beschränkt sich also insbesondere nicht lediglich auf die Schwerkraft. Im Anschluss an dieses weitere Verringern beträgt der Haubenspalt vorzugsweise weniger als 6 mm, besonders bevorzugt weniger als 3 mm, ganz besonderes bevorzugt weniger als 1 mm. In einer weiter verbesserten Ausführungsform beträgt der Haubenspalt schließlich lediglich 0 bis 0,3 mm.

In einer alternativen Ausgestaltung ist die Drehfalle lediglich in einer Vorrastposition verrastet worden und wird dann durch eine Zuziehhilfe weiter zur Hauptrastposition gedreht und dann in der Hauptrastposition durch die Sperrklinke oder durch eine weitere Sperrklinke verrastet. Eine Zuziehhilfe meint einen Antrieb nebst einer Mechanik, die die Drehfalle in vorgenannter Weise zu drehen vermag. Im Anschluss an das Verrasten in der Hauptrastposition kann die Zuziehhilfe in ihre Ausgangsstellung bewegt werden. Auch bei dieser Ausführungsform beträgt der Haubenspalt im Anschluss an dieses weitere Verringern vorzugsweise weniger als 6 mm, besonders bevorzugt weniger als 3 mm, ganz besonderes bevorzugt weniger als 1 mm. In einer weiter verbesserten Ausführungsform beträgt der Haubenspalt schließlich lediglich 0 bis 0,3 mm. Zur Steuerung sind vorzugsweise wiederum ein oder mehrere Mikroschalter vorgesehen, die Stellungen von Komponenten geeignet detektieren und in Abhängigkeit davon Start- und Stoppsignale für den Antrieb auslösen.

Auch im Anschluss an diese weitere Verringerung des Haubenspalts durch ein vorzugsweise nicht kraft begrenztes Bewegen kann die Drehfalle vorzugsweise in eine Überhubposition verschwenkt werden. Die Drehfalle kann also weiter gedreht werden und zwar vorzugsweise um wenigstens 10°, besonders bevorzugt um wenigstens 20°, ganz besonders bevorzugt um wenigstens 30°. Durch die Möglichkeit des Weiterdrehens der Drehfalle in eine Überhubstellung kann die Position des Schließbolzens vorzugsweise um wenigstens 10 mm, besonders bevorzugt um wenigstens 20 mm weiter abgesenkt werden und zwar von der Haube aus gesehen.

Abschließend kann die verrastete Position des Gesperres in einer Ausgestaltung durch eine weitere Sperrklinke oder einen Blockadehebel ergänzend gesichert werden. So kann ein Blockadehebel in eine Stellung verschwenkt werden, die verhindert, dass die Sperrklinke aus ihrer Raststellung herausbewegt werden kann. Auch im Anschluss an diese ergänzende Sicherung kann die Drehfalle vorzugsweise in eine Überhubposition verschwenkt werden.

Ein Schließen der Haube erfolgt in einer bevorzugten Ausgestaltung gemäß folgender Reihenfolge:
- Die Haube wird manuell aufgelegt bzw. geschlossen, wobei der Durchschlagsschutz aktiviert ist. Der Haubenspalt beträgt dann 15 mm.
- Ein Startsignal aktiviert dann eine Drehung der Drehfalle ausgehend von ihrer Position Offen. Der Haubenspalt beträgt zunächst weiterhin 15 mm.
- Es erfolgt im Anschluss daran ein kraftbegrenztes Zuziehen bzw. Absenken der Haube durch eine Schwinge und einen Antrieb für die Schwinge.
- Der Haubenspalt beträgt im Anschluss an dieses kraftbegrenzte Absenken 6 - 7 mm. Ein Stoppsignal stoppt den Antrieb durch aufgrund einer Betätigung eines Mikroschalters.
- Im Anschluss an eine Pause von zum Beispiel einer Sekunde erfolgt ein Neustart des Antriebs und ein ggfs. ein weiteres Absenken, bis der Haubenspalt 6 mm beträgt.
- Im Anschluss daran wird das Gesperre verrastet, indem die Sperrklinke in ihre Raststellung bewegt wird. Es liegt dann ein Haubenspalt von 4 - 6 mm vor.
- Durch den Antrieb wird anschließend der Durchschlagsschutz aus seiner abfangenden Stellung bewegt.
- Die Drehfalle wird weiter derart bewegt, dass der Haubenspalt weiter verkleinert wird und schließlich praktisch nicht mehr vorhanden ist.
- Optional wird nun das Gesperre durch eine weitere Klinke oder einen Blockadehebel zusätzlich gesichert.

Ein Öffnen wird vorzugsweise wie folgt durchgeführt:
- Es erfolgt eine erste Betätigung. So kann zum Beispiel ein Schalter betätigt werden oder das Öffnen elektronisch so zum Beispiel durch Aktivierung eines Sensors oder Senders in Gang gesetzt werden.
- Ausgehend von einem Haubenspalt von 0 mm oder nahe 0 mm, startet der Antrieb aufgrund der Betätigung, der dann ggfs. zunächst die zweite Sperrklinke oder den Blockadehebel in eine Öffnungsstellung verschwenkt.
- Durch den Antrieb kann wird der Haubenspalt vergrößert, so zum Beispiel bis zu 4 mm.
- Im Anschluss daran wird durch den Antrieb der Durchschlagsschutz aktiviert, also der Abfanghebel in seine abfangende Stellung verschwenkt. Die Drehfalle wird so in Richtung Überhub blockiert, um die Haube störungsfrei anheben zu können.
- Durch den Antrieb wird dann der Haubenspalt weiter vergrößert, so zum Beispiel auf bis zu 6 mm.
- Vorzugsweise stoppt dann der Antrieb aufgrund eines Stoppsignals, welches von einem Sensor, insbesondere einem Mikroschalter, ausgelöst wurde. Die Sperrklinke befindet sich dann noch in ihrer Hauptraststellung.
- Beispielsweise aufgrund einer zweiten Betätigung oder zum Beispiel nach Ablauf einer vorgegebenen Zeit startet der Antrieb erneut und bewegt die Sperrklinke aus ihrer Raststellung. Der Haubenspalt kann dann 6 - 8 mm betragen. Da das System entlastet ist, kann ein Ausheben der Sperrklinke aus ihrer Raststellung vorteilhaft ohne einen Öffnungsknall, also mit minimalem Geräusch, erfolgen.
- Im Anschluss daran wird die Haube durch den Antrieb weiter geöffnet, bis der Haubenspalt in dadurch maximal möglicher Weise vergrößert worden ist und zum Beispiel schließlich 15 mm beträgt.
- Ist der Haubenspalt so weiter vergrößert worden, so stoppt der Antrieb. Die Haube kann nun zum Beispiel manuell in gewünschter Weise weiter geöffnet werden.

Eine Schließvorrichtung zur Durchführung des Verfahrens weist ein Gesperre aus Drehfalle und Sperrklinke für ein Verrasten der Drehfalle auf. Die Schließvorrichtung umfasst einen Antrieb, mit dem das Gesperre ganz oder teilweise insbesondere mittels eines Schwinghebels, nachfolgend auch Schwinge genannt, so bewegt werden kann, dass ein Klappenspalt bzw. Haubenspalt verkleinert werden kann. Wird also eine zugehörige Klappe bzw. Haube geschlossen, so verbleibt zunächst ein Spalt zwischen der Klappe und der angrenzenden Karosserie. Durch den Antrieb kann die Schwinge und damit das Gesperre oder Teile des Gesperres so bewegt werden, dass sich dieser Spalt verringert. Um das Gewicht und die Zahl der Teile zu minimieren, sind Drehfalle und Sperrklinke vorzugsweise drehbar an der Schwinge durch Achsen befestigt.

In einer Ausgestaltung ist ein Abfanghebel für ein Abfangen der Drehfalle an der Schwinge befestigt und zwar vorzugsweise drehbar befestigt. Der Abfanghebel bildet den Durchschlagsschutz. Hierunter ist zu verstehen, dass die Drehfalle während eines Schließvorgangs auf den Abfanghebel auftreffen kann, um so einen Stoß von der Drehfalle in die Karosserie mittelbar oder unmittelbar einzuleiten. Der Durchschlagsschutz ist daher entweder unmittelbar an der Karosserie befestigt oder aber zum Beispiel an der vorgenannten Schwinge, die wiederum so mit der Karosserie verbunden oder verbindbar ist, dass Aufprallkräfte über die Schwinge in die Karosserie eingeleitet werden. Diese Ausführungsform trägt dazu bei, dass mechanisch empfindliche Komponenten wie der Antrieb vor solchen Stoß- bzw. Aufprallkräften und damit vor Beschädigungen geschützt werden.

Die Schließvorrichtung ist insbesondere so beschaffen, dass die Sperrklinke die Drehfalle erst verrasten kann, wenn die Drehfalle von dem Abfanghebel abgefangen worden ist. Diese Ausgestaltung trägt dazu bei, dass ein Haubenspalt bereits relativ klein ist, bevor die Drehfalle verrastet wird. Dies trägt dazu bei, Verletzungen durch eingeklemmte Finger und dergleichen zu vermeiden.

In einer Ausgestaltung ist das Schloss bzw. die Schließvorrichtung so beschaffen, dass die Sperrklinke die Drehfalle erst verrasten kann, nachdem der Antrieb die Schwinge zur Verringerung eines Haubenspalts verschwenkt hat. Dies trägt verbessert dazu bei, Verletzungen durch eingeklemmte Finger und dergleichen zu vermeiden.

In einer Ausgestaltung gibt es eine Steuerkontur, die den Abfanghebel aus seiner abfangenden Stellung heraus zu schwenken vermag, nachdem der Abfanghebel die Drehfalle abgefangen hat. Auf technisch einfache Weise kann so mit einer geringen Zahl von Teilen ein Schloss mit vorteilhaften Eigenschaften bereitgestellt werden, welches insbesondere einen Antrieb für eine Spaltminimierung vor Stößen zu schützen vermag und welches so beschaffen ist, dass Verletzungsrisiken aufgrund von eingeklemmten Fingern vermieden werden.

In einer Ausgestaltung gibt es eine Steuerkontur, die den Abfanghebel aus seiner abfangenden Stellung heraus zu schwenken vermag, indem die Schwinge für ein Verringern eines Haubenspalts bzw. Klappenspalts verschwenkt wird. Auf technisch einfache Weise kann so mit einer geringen Zahl von Teilen ein Schloss bzw. eine Schließvorrichtung mit vorteilhaften Eigenschaften bereitgestellt werden, welches bzw. welche insbesondere einen Antrieb für eine Spaltminimierung vor Stößen zu schützen vermag und welches bzw. welche so beschaffen ist, dass Verletzungsrisiken durch Einklemmen von Fingern vermieden werden.

In einer Ausgestaltung gibt es ein Gestänge, welches durch einen Antrieb betätigt werden kann, um die Sperrklinke in ihre Raststellung hinein zu bewegen und/ oder heraus zu bewegen. Diese Ausführungsform ermöglicht ein geeignetes Verschwenken der Sperrklinke. Als Antrieb wird insbesondere der Antrieb vorgesehen, der die Schwinge zu verschwenken vermag. Die Zahl der benötigten Antriebe wird so gering gehalten. Alternativ kann eine Steuerkontur vorgesehen sein, mit der die Bewegung der Sperrklinke insbesondere bewirkt durch Schwenkbewegungen der Schwinge geeignet gesteuert wird. Die Sperrklinke ist insbesondere durch eine Feder vorgespannt und zwar derart, dass durch Federkraft die Sperrklinke in ihre Raststellung hinein bewegt werden kann.

In einer technisch einfachen Ausgestaltung verfügt der Antrieb über eine Antriebsscheibe, die die Schwinge zu verschwenken vermag.

In einer Ausgestaltung verfügt die Antriebsscheibe über einen abstehenden Bolzen, nachfolgend auch erster Bolzen genannt, mit dem Drehbewegungen der Antriebsscheibe begrenzt werden können. Insbesondere bewirkt ein Drehen der Antriebsscheibe bei dieser Ausführungsform, dass der Bolzen gegen einen Anschlag bewegt wird, umso Drehbewegungen der Antriebsscheibe geeignet zu begrenzen. Der erste Bolzen ist insbesondere randseitig angebracht, um einen geringen Bauraum zu ermöglichen.

In einer Ausgestaltung der Erfindung wird der Anschlag für den ersten Bolzen durch einen beweglichen Anschlag und zwar insbesondere durch einen drehbar gelagerten Hebel bereitgestellt. Hierdurch wird es möglich, Drehbewegungen der Antriebsscheibe trotz Vorhandsein eines Anschlags zu ermöglichen, die bis zu 360° und mehr betragen. Vorzugsweise weist der drehbar gelagerte Hebel ein T-förmiges Ende auf, um unmittelbar als Anschlag zu dienen. Der erste Bolzen gelangt dann insbesondere in einen Winkel des T-förmigen Endes hinein, wenn die Antriebsscheibe in maximal möglicher Weise gedreht worden ist. Vorzugsweise gibt es ein oder zwei weitere Anschläge, zum Beispiel in Form von Bolzen, die die Bewegungen des beweglichen Anschlags, also zum Beispiel die Schwenkbewegungen des drehbar gelagerten Hebels, begrenzen, umso besonders zuverlässig einen Anschlag bereitzustellen, der die Drehbewegungen der Antriebsscheibe geeignet zu begrenzen vermag.

In einer Ausgestaltung verfügt die Antriebsscheibe über einen abstehenden Bolzen, nachfolgend auch zweiter Bolzen genannt, mit dem Schwenkbewegungen der Schwinge durch Aufliegen gesteuert werden können. Während eines Schließvorgangs liegt die Schwinge auf diesem zweiten Bolzen auf und zwar vorzugsweise mit einem bogenförmigen Ende. Drehbewegungen der Antriebsscheibe ermöglichen dann ein Bewegen des zweiten Bolzens. Hierdurch wird ein Verschwenken der Schwinge während eines Schließvorgangs zwecks Verkleinerung eines Spalts ermöglicht, wenn die Schwinge auf dem zweiten Bolzen aufliegt. Da die Schwinge lediglich aufliegt, kann diese manuell von dem Bolzen weggeschwenkt werden. Die Tür oder Klappe wird also nicht mit der vom Antrieb aufgewendeten Kraft zugezogen. Verletzungsrisiken werden so vermieden, wenn sich ein Finger dann im Spalt einer zugehörigen Tür oder Klappe bzw. Haube befindet.

In einer Ausgestaltung ist ein vorstehender Bolzen, nachfolgend auch dritter Bolzen genannt, an der Antriebsscheibe angebracht, der durch Drehen der Antriebsscheibe in ein bogenförmiges Ende der Schwinge hinein bewegt werden kann, um so die Schwinge zu erfassen und zu verschwenken. Durch diese Ausgestaltung wird erreicht, dass während eines Schließvorgangs die Stellung der Schwinge durch die Position des Bolzens festgelegt wird, wenn der Bolzen in das bogenförmige Ende hinein bewegt worden ist. Manuelle Bewegungen der Schwinge durch Verschwenken einer Tür oder Klappe sind dann nicht mehr möglich. Die Tür oder Klappe kann dann mit der vom Antrieb aufgewendeten Kraft zugezogen werden, so zum Beispiel gegen einen Dichtungsdruck einer Klappendichtung.

In einer Ausgestaltung der Erfindung wird ein Verschwenken der Schwinge für eine Spaltverkleinerung zunächst durch den vorgenannten zweiten Bolzen und anschließend durch den vorgenannten dritten Bolzen bewirkt. In einer ersten Phase während des Verkleinerns eines Spalts kann daher ein im Spalt befindlicher Finger durch den Antrieb nicht weiter eingeklemmt werden. Erst wenn der Spalt hinreichend verkleinert worden ist, übernimmt der dritte Bolzen das Verkleinern des Spalts und zieht die Klappe zu.

In einer Ausgestaltung der Erfindung gibt es einen vorzugsweise schwenkbar befestigten Abstützhebel, der die Schwinge abzustützen vermag, wenn in diese ein Stoß aufgrund eines Schließvorgangs eingeleitet wird. Diese Ausführungsform trägt dazu bei, dass der Antrieb vor Stoßkräften und damit vor Beschädigungen geschützt wird. Um Belastungen geeignet zwecks Vermeidung von Beschädigungen zu verteilen, stützt der Abstützhebel insbesondere das verschwenkbare Ende der Schwinge ab.

In einer Ausgestaltung der Erfindung werden Schwenkbewegungen des Abstützhebels durch einen Bolzen, vorzugsweise durch den genannten zweiten Bolzen, der Drehscheibe bewirkt. Der Abstützhebel kann so zu einem geeigneten Zeitpunkt aus seiner abstützenden Stellung heraus bewegt werden, um eine Spaltverkleinerung durch anschließendes Verschwenken der Schwinge zu ermöglichen. Der Abstützhebel ist vorzugsweise durch eine Feder vorgespannt und zwar derart, dass der Abstützhebel durch Federkraft in seine abstützende Stellung verschwenkt werden kann.

In einer Ausgestaltung der Erfindung sind Drehfalle und Sperrklinke nahe der Achse angeordnet, um die die Schwinge verschwenkt werden kann. Der Abstand der Achsen von Drehfalle und Sperrklinke zu der Achse der Schwinge ist daher geringer als der Abstand zwischen den Achsen von Drehfalle und Sperrklinke zu dem Ende der Schwinge, welches verschwenkt wird. Hierdurch wird ein günstiges Hebelverhältnis bereitgestellt, um mit großer Kraft das Gesperre zum Beispiel gegen einen Dichtungsdruck bewegen zu können. Insbesondere sind Drehfalle und/oder Sperrklinke in einem ersten Drittel der Schwinge durch ihre Achsen befestigt, so dass das Hebelverhältnis wenigstens 1:2 beträgt.

In einer Ausgestaltung der Erfindung kann die Drehfalle von der Öffnungsstellung weggeschwenkt werden, wenn diese verrastet ist. Gibt es mehrere Rastpostionen, also eine Hauptrast und eine Vorrast, dann gilt dies für die Hauptrastposition. Insbesondere gibt es keinen Anschlag, der dieses Wegschwenken aus der (Haupt-)Rastposition zu begrenzen vermag, wenn der Schließbolzen über die vorgesehene Schließstellung hinaus bewegt wird, also entgegengesetzt zur Öffnungsbewegung bzw. in Richtung Überhubstellung der Drehfalle. Hierdurch werden Verletzungsrisiken vermieden. Fällt eine Person auf die planmäßig verschlossene Motorhaube, so ist die Motorhaube zumindest im Bereich des Schlosses bzw. der Schließvorrichtung bei dieser Ausführungsform vorteilhaft nachgiebig.

Vorzugsweise verfügt die Schließeinrichtung über ein oder mehrere Mikroschalter, mit denen Stellungen von ein oder mehreren Komponenten der Schließeinrichtung ermittelt werden können. Insbesondere wird dies dazu genutzt, um den Antrieb geeignet zu steuern.

Es zeigen
- FIG. 1: Schließvorrichtung in geöffneter Stellung;
- FIG. 2: erste Phase während eines Schließvorgangs;
- FIG. 3: zweite Phase während eines Schließvorgangs;
- FIG. 4: dritte Phase während eines Schließvorgangs;
- FIG. 5: Schließvorrichtung in verrasteter Stellung;
- FIG. 6: Schließvorrichtung mit Drehfalle in einer Überhubposition.

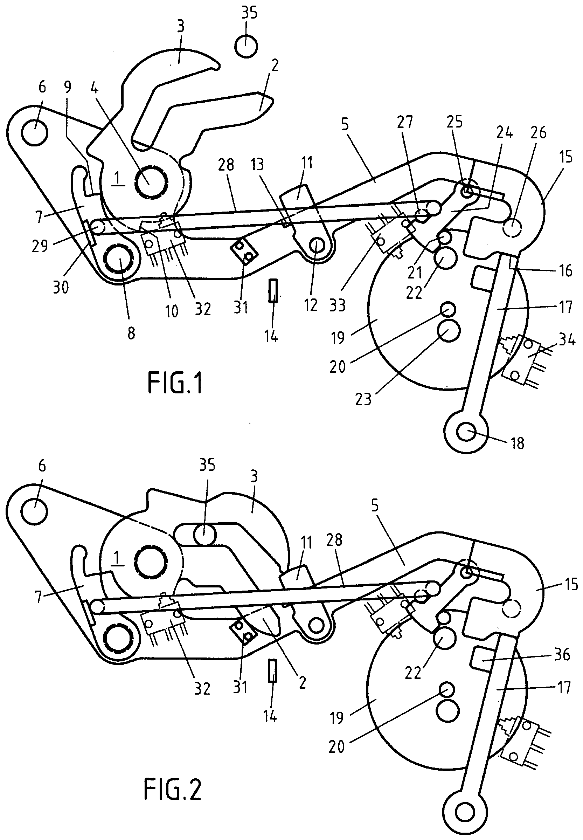

Die FIG. 1 zeigt eine Drehfalle 1 mit Fangarm 2 und Lastarm 3 in ihrer geöffneten Stellung. Die Drehfalle 1 ist verschwenkbar mit einer Achse 4 an einer Schwinge 5 angebracht. Die Schwinge 5 kann um ihre Achse 6 gedreht werden. Die Achse 6 ist an einer nicht dargestellten Karosserie unmittelbar oder aber beispielsweise mittelbar über eine nicht dargestellte Schlossplatte an der Karosserie eines Kraftfahrzeugs befestigt. Die Drehfalle 1 kann durch eine Sperrklinke 7 verrastet werden. Die Sperrklinke 7 ist drehbar mittels einer Achse 8 an der Schwinge 5 angebracht. Die Sperrklinke 7 verfügt über eine Rastfläche 9. Diese Rastfläche 9 liegt an der Rastfläche 10 der Drehfalle 1 an, wenn die Drehfalle 1 verrastet ist.

Ein Abfanghebel 11 ist mit einer Achse 12 drehbar an der Schwinge 5 befestigt und zwar in einem mittleren Bereich der Schwinge 5. Der Abfanghebel 11 dient als Durchschlagsschutz, um insbesondere den nachfolgend beschriebenen Anschlag vor Beschädigungen zu schützen, wenn die Haube geschlossen wird.

Die Schwinge 5 ist mit einem abstehenden Anschlag 13 versehen, der das Verschwenken des Abfanghebels 11 entgegengesetzt zum Uhrzeigersinn begrenzt. Der Abfanghebel 11 ist bevorzugt durch eine nicht dargestellte Feder so vorgespannt, dass dieser durch die Vorspannung in Richtung des Anschlags 13 verschwenkt werden kann. Eine Steuerkontur 14 ist an der Schlossplatte oder unmittelbar an der Karosserie angebracht, mit der das Verschwenken des Abfanghebels 11 gesteuert werden kann.

In der gezeigten geöffneten Stellung des Gesperres stützt sich das schwenkbare, bogenförmige Ende 15 der Schwinge 5 auf einem schwenkbaren Ende 16 eines Abstützhebels 17 ab. Der Abstützhebel 17 ist mit einer Achse 18 an einer Schlossplatte oder unmittelbar an der Karosserie befestigt. Der Abstützhebel 17 kann um die Achse 18 verschwenkt werden.

Eine Antriebsscheibe 19 ist drehbar um ihre Achse 20 gelagert. Die Achse 20 ist an einer Schlossplatte oder unmittelbar an der Karosserie befestigt. Von der Antriebsscheibe 19 steht ein erster Bolzen 21, ein zweiter Bolzen 22 und ein dritter Bolzen 23 ab. Die drei Bolzen 21, 22 und 23 sowie die Achse 20 sind vorzugsweise in etwa entlang einer geraden Linie angeordnet, um Drehbewegungen der Antriebsscheibe besonders gut ausnutzen zu können und zugleich den Bauraum gering zu halten. Der erste Bolzen 21 ist randseitig der Antriebsscheibe 19 angeordnet. Der zweite Bolzen 22 befindet sich zwischen der Achse 20 und dem ersten Bolzen 21 und zwar nahe beim ersten Bolzen 21. Der dritte Bolzen 23 ist nahe bei der Achse 20 angeordnet. Die Achse 20 befindet sich zwischen dem zweiten Bolzen 22 und dem dritten Bolzen 23. Die Antriebsscheibe 19 kann durch einen nicht dargestellten elektrischen Antrieb um ihre Achse 20 gedreht werden.

Es gibt einen schwenkbaren Hebel 24 mit einem T-förmigen Ende, der um seine Achse 25 gedreht werden kann. Die Achse 25 ist an einer Schlossplatte oder unmittelbar an der Karosserie befestigt. Es gibt vorzugsweise ergänzend zwei Anschläge 26 und 27 für den Hebel 24 mit dem T-förmigen Ende, die an einer Schlossplatte oder unmittelbar an der Karosserie angebracht sind. Die Anschläge 26 und 27 begrenzen die Schwenkbewegung des Hebels 24 mit dem T-förmigen Ende.

Der schwenkbare Hebel 24 mit dem T-förmigen Ende begrenzt Drehbewegungen der Scheibe 19. So liegt in der dargestellten geöffneten Stellung der erste Bolzen 21 der Antriebsscheibe 19 an dem T-förmigen Ende des Hebels 24 an, so dass die Antriebsscheibe 19 nicht weiter entgegengesetzt zum Uhrzeigersinn gedreht werden kann. In dieser Stellung liegt dass T-förmige Ende des Hebels 24 an dem vorzugsweise bolzenförmigen Anschlag 27 an, der so dazu beiträgt, dass die Antriebsscheibe 19 nicht weiter entgegengesetzt zum Uhrzeigersinn gedreht werden kann, so dass ein mechanischer Endanschlag realisiert ist.

Es gibt ein Gestänge 28, mit dem ein Schwenken der Sperrklinke 7 bewirkt werden kann. Das Gestänge 28 ist lediglich schematisch angedeutet. Es ist in nicht näher dargestellter Weise einerseits mit der Sperrklinke 7 verbunden und andererseits mit einem Antrieb, so zum Beispiel mit dem Antrieb, der auch die Antriebsscheibe 19 zu drehen vermag. Das Gestänge 28 kann mit einem Ende 29 drehbar mit der Sperrklinke 7 verbunden sein. Alternativ oder ergänzend kann das Ende 29 an einem Vorsprung 30 der Sperrklinke 7 anliegen, um so die Sperrklinke 7 beispielsweise entgegengesetzt zu einer Federkraft aus einer Raststellung heraus schwenken zu können. Die Sperrklinke 7 kann also in einer Ausführungsform durch eine nicht dargestellte Feder so vorgespannt sein, dass diese Feder die Sperrklinke 7 in ihre Raststellung hinein zu bewegen vermag.

An der Schwinge 5 kann ein Bremselement, Dämpfungselement oder Anschlag 31 angebracht sein, welches bzw. welcher ein Verschwenken der Drehfalle 1 im Uhrzeigersinn zumindest zeitweise zu begrenzen vermag. Das Element 31 verfügt vorzugsweise über eine Sollbruchstelle, die bricht, wenn ein Fußgänger auf die Haube fällt, um so einen Fußgängerschutz zu ermöglichen. Es besteht vorzugsweise aus Kunststoff. Das Element 31 dient insbesondere dazu zu verhindern, dass die Drehfalle 1 bei einem Öffnen der Haube nach unten durchdreht, wenn die Haube beispielsweise einer Schneelast ausgesetzt ist.

Es gibt Mikroschalter 32, 33 und 34, mit denen Stellungen von Komponenten des Gesperres detektiert werden können. Mit einem ersten Mikroschalter 32 wird beispielsweise die Stellung der Drehfalle 1 ermittelt. Mit einem zweiten Mikroschalter 33 wird beispielsweise die Stellung der Antriebsscheibe 19 ermittelt. Mit einem dritten Mikroschalter 34 wird beispielsweise die Stellung der Schwinge 5 ermittelt. Es können aber alternativ oder ergänzend auch noch andere Mikroschalter vorgesehen sein, mit denen andere Stellungen und/oder andere Komponenten detektiert werden.

In der FIG. 1 wird ferner ein Schließbolzen 35 während eines Schließens einer zugehörigen Haube gezeigt, der an der nicht dargestellten Haube eines Kraftfahrzeugs befestigt ist. Der Schließbolzen 35 hat den Fangarm 2 der Drehfalle 1 noch nicht erreicht. Die Haube ist noch geöffnet.

Die Achsen 4 und 8 von Drehfalle 1 und Sperrklinke 7 sind relativ nahe bei der Achse 6, dem Lagerpunkt der Schwinge 5, angeordnet und damit relativ weit entfernt von dem Ende 15 der Schwinge 5, um so ein günstiges Hebelverhältnis bereitzustellen.

Wird ausgehend von der FIG. 1 die Haube des Kraftfahrzeugs weiter geschlossen, so erreicht der Schließbolzen 35 zunächst den Fangarm 2 der Drehfalle 1 und verdreht im Anschluss daran die Drehfalle 1 im Uhrzeigersinn, bis der Lastarm 3 der Drehfalle 1 auf den Abfanghebel 11 auftrifft. Der damit verbundene Stoß wird über den Abfanghebel 11 in die Schwinge 5 eingeleitet. Von hier aus werden der Stoß bzw. die damit verbundenen Kräfte in die Karosserie eingeleitet und zwar einerseits über die Achse 6 der Schwinge 5 und andererseits über den Abstützhebel 17. Die Antriebsscheibe 19 wird so vor Stoßkräften geschützt, die während des Schließens auftreten. Ergänzend kann der Fangarm 2 den Anschlag 31 bzw. das Dämpfungselement / Bremselement 31 erreicht haben, um so ergänzend Stoßkräfte von der Drehfalle 1 in die Schwinge 5 einzuleiten. Die Drehfalle 1 hat eine Stellung erreicht, die es erlauben würde, dass die Sperrklinke 7 in ihre Raststellung hinein bewegt werden kann. Dies wird aber zunächst durch das Gestänge 28 verhindert. Der Haubenspalt beträgt beispielsweise immer noch mehr als 12 mm, bevorzugt zumindest 15 mm, so dass Finger im Haubenspalt zumindest nicht sehr stark gequetscht werden können. Insbesondere beträgt der Spalt zwischen Haube und Scheinwerfergrill oder Kühlergrill 15 mm.

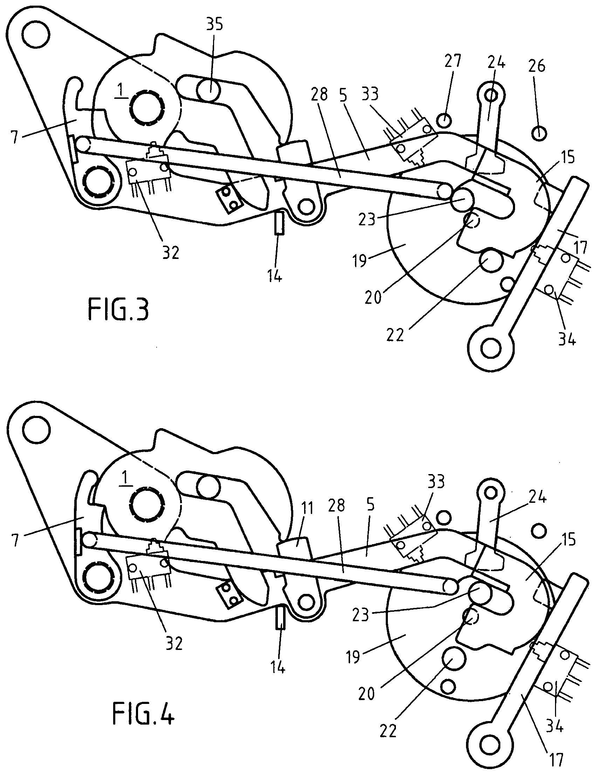

Erreicht die Drehfalle 1 die in der FIG. 2 gezeigte Stellung, so wird dadurch beispielsweise der Mikroschalter 32 betätigt. Hierdurch kann der Antrieb in Gang gesetzt werden, der die Antriebsscheibe 19 anzutreiben bzw. zu drehen vermag. Die Antriebsscheibe 19 dreht sich daraufhin im Uhrzeigersinn. Der zweite Bolzen 22 gelangt so zum Abstützhebel 17 und erfasst beispielsweise einen Vorsprung 36 des Abstützhebels 17. Ein Weiterdrehen der Antriebsscheibe 19 im Uhrzeigersinn hat daher zur Folge, dass der Abstützhebel 17 aus seiner in der FIG. 2 gezeigten Stellung im Uhrzeigersinn heraus geschwenkt wird. Die Unterseite des bogenförmigen Endes 15 der Schwinge 5 liegt währenddessen auf dem zweiten Bolzen 22 auf. Ein Weiterdrehen der Antriebsscheibe 19 im Uhrzeigersinn hat zur Folge, dass die Schwinge 5 im Uhrzeigersinn um ihre Achse 6 verschwenkt wird und schließlich die in der FIG. 3 gezeigte Stellung erreicht. Dies kann durch die Schließbewegung der Haube bewirkt werden oder aber alternativ oder ergänzend durch Schwerkraft, die entsprechend auf die Haube einwirkt. Ein Tür- oder Haubenspalt wird entsprechend verkleinert. Es wird so das Spaltmaß auf weniger als 10 mm verringert, so zum Beispiel auf 7 mm. Die Bewegung von Drehfalle 1 und aufliegender Haube erfolgt daher kraftbegrenzt und zwar vorzugsweise allein aufgrund von Schwerkraft. Der Antrieb ermöglicht lediglich diese Bewegung und trägt lediglich mittelbar dazu bei, die Drehfalle 1 zusammen mit der aufliegenden Haube zu bewegen.

Die FIG. 3 verdeutlicht, dass sich der Hebel 24 mit dem T-förmigen Ende währenddessen vom Anschlag 27 gelöst hat. Dieser Hebel ist beispielsweise aufgrund von Schwerkraft in die in der FIG. 3 gezeigte Stellung verschwenkt worden. Von Bedeutung ist, dass die Drehfalle 1 nach wie vor nicht verrastet worden ist, obwohl der Haubenspalt bereits nur noch wenige Millimeter beträgt, so zum Beispiel maximal 7 mm, bevorzugt maximal 5 mm. Dies dient der Sicherheit, da beispielsweise ein Finger im Haubenspalt nicht eingeklemmt sein kann. Erst wenn der Haubenspalt hinreichend klein ist, dass kein Finger mehr in den Spalt hineinpasst, hat ein Weiterdrehen der Antriebsscheibe 19 zur Folge, dass das Gestänge 28 in eine Stellung bewegt wird, die bewirkt, dass die Sperrklinke 7 die Drehfalle 1 verrastet. Es kann aber auch mit Erreichen der in der FIG. 3 gezeigten Stellung beispielsweise der Mikroschalter 33 betätigt werden. Es kann so ein separater Antrieb für das Gestänge 28 in Gang gesetzt werden, der bewirkt, dass die Sperrklinke 7 durch entsprechendes Bewegen des Gestänges 28 die Drehfalle 1 verrastet, wie dies in der FIG. 4 gezeigt wird. Das Verrasten der Drehfalle 1 erfolgt erfindungsgemäß mit zeitlicher Verzögerung von zum Beispiel einer Sekunde im Anschluss an ein Stoppen des Antriebs.

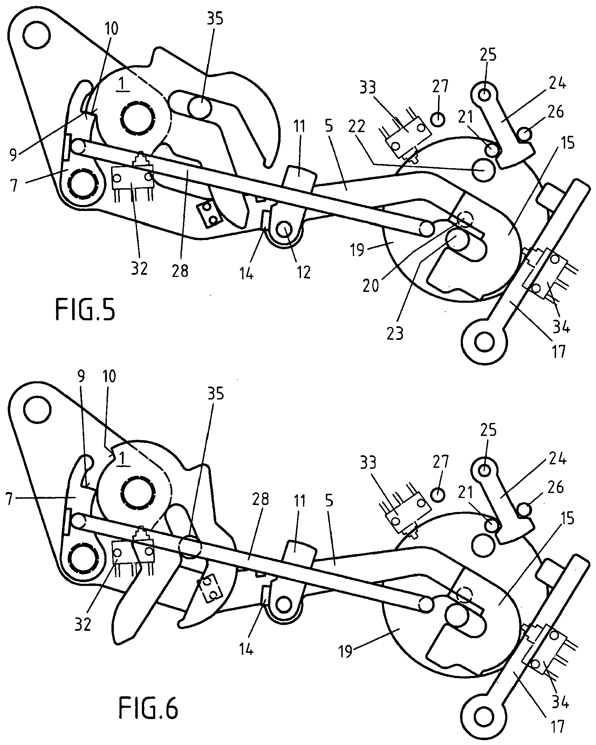

Wie die FIG. 3 und 4 verdeutlichen, gelangt der dritte Bolzen 23 der Antriebsscheibe 19 in das bogenförmige Ende 15 der Schwinge 5 hinein. Nach wie vor beträgt dann das Spaltmaß mehrere mm und liegt beispielsweise zwischen 5 und 7 mm. Ein Weiterdrehen der Antriebsscheibe 19 im Uhrzeigersinn hat zur Folge, dass schließlich die in der FIG. 5 gezeigte Stellung durch Zuziehen erreicht wird. Der dritte Bolzen 23 der Antriebsscheibe 19, der sich währenddessen innerhalb des bogenförmigen Endes 15 der Schwinge 5 befindet, hat die Schwinge 5 weiter im Uhrzeigersinn um ihre Achse 6 verschwenkt. Dies kann gegen einen Gegendruck wie zum Beispiel Dichtungsdruck einer Dichtung für die Haube erfolgt sein, da nun nicht kraftbegrenzt bewegt wird. Hierdurch wird der Haubenspalt weiter verkleinert, ohne ein Verletzungsrisiko befürchten zu müssen. Dass Spaltmaß kann so auf weniger als 1 mm reduziert worden sein, so zum Beispiel auf nicht mehr als 0,2 mm, besonders bevorzugt auf nicht mehr als 0,1 mm.

Durch die Steuerkontur 14 ist der Abfanghebel 11 aus seiner die Drehfalle 1 abfangenden Stellung im Uhrzeigersinn um seine Achse 12 herum heraus geschwenkt worden. Der erste Bolzen 21 der Antriebsscheibe 19 hat die andere Seite des T-förmigen Endes des Hebels 24 erfasst und diesen Hebel 24 um seine Achse 25 herum entgegengesetzt zum Uhrzeigersinn verschwenkt. Diese Schwenkbewegung ist schließlich durch Erreichen des Anschlags 26 wie in der FIG. 5 gezeigt begrenzt worden. Ein Weiterdrehen der Antriebsscheibe 19 im Uhrzeigersinn ist dann nicht mehr möglich. Durch Vorsehen des Schwenkhebels 24 mit dem T-förmigen Ende wird einerseits das Drehen der Antriebsscheibe 19 begrenzt. Andererseits werden so besonders große Drehwinkel der Antriebsscheibe 19 ermöglicht und zwar insbesondere Drehwinkel von 360 Grad und mehr.

Da der Abfanghebel 11 gemäß FIG. 5 aus seiner abfangenden Stellung heraus geschwenkt ist, ist es möglich, dass die Drehfalle 1 sich weiter im Uhrzeigersinn verschwenkt, wie dies in der FIG. 6 gezeigt wird. Dies dient zum Beispiel dem Schutz von Personen, die auf die zugehörige Haube fallen. Die Haube kann so im Bereich des Schlosses weiter nach unten gedrückt werden, ohne dass eine solche Bewegung durch das Gesperre blockiert würde, was Verletzungsrisiken für Personen vermindert. Ein sogenannter Fußgängerschutz kann also realisiert werden. So kann der Schließbolzen 35 insbesondere um mehr als 10 mm, vorzugsweise um wenigstens 20 mm weiter entgegengesetzt zur Öffnungsrichtung bewegt werden, also von der Haube aus gesehen weiter abgesenkt werden. Die verrastete Drehfalle 1 kann zu diesem Zweck um wenigstens 10°, bevorzugt um wenigstens 20° von der Öffnungsstellung weggeschwenkt werden, wie die FIG. 6 verdeutlicht.

Ein Öffnen des Gesperres erfolgt entsprechend umgekehrt.

Wie bereits ausgeführt, kann es sich bei dem Element 31 um ein Kunststoffelement mit einer Sollbruchstelle handeln. Das Kunststoffelement verhindert, wenn beispielsweise Schnee auf der Haube liegt und der elektrische Antrieb die Haube anhebt, dass dann die Drehfalle 1 nach unten durchdreht.

Alternativ, also in dem Fall, in dem das Kunststoffelement 31 nicht vorhanden ist, kann an der Drehfalle 1 eine starke Feder angeordnet sein, die wiederum stark genug ist, um die Haube mit einer Schneelast anzuheben.

### Bezugszeichenliste

1: Drehfalle
2: Fangarm
3: Lastarm
4: Achse der Drehfalle
5: Schwinge
6: Achse der Schwinge
7: Sperrklinke
8: Achse der Sperrklinke
9: Sperrklinkenrastfläche
10: Drehfallenrastfläche
11: Abfanghebel
12: Achse für Abfanghebel
13: Anschlag bzw. Drehbegrenzungselement für Abfanghebel
14: Steuerkontur für Abfanghebel
15: bogenförmiges Ende der Schwinge
16: schwenkbares Ende eines Abstützhebels
17: Abstützhebel
18: Achse des Abstützhebels
19: Antriebsscheibe
20: Achse der Antriebsscheibe
21: erster Bolzen der Antriebsscheibe
22: zweiter Bolzen der Antriebsscheibe
23: dritter Bolzen der Antriebsscheibe
24: Hebel mit T-förmigem Hebelende
25: Achse für Hebel mit dem T-förmigen Ende
26: Anschlag bzw. Drehbegrenzungselement für den Hebel mit dem T-förmigen Ende
27: Anschlag bzw. Drehbegrenzungselement für den Hebel mit dem T-förmigen Ende
28: Gestänge für ein Schwenken der Sperrklinke
29: Gestängeende bei der Sperrklinke
30: Vorsprung der Sperrklinke
31: Bremselement oder Anschlag für Drehfalle
32: Mikroschalter
33: Mikroschalter
34: Mikroschalter
35: Schließbolzen
36: Vorsprung des Abstützhebels

## Patentansprüche

1. Verfahren für ein Schließen einer Haube eines Kraftfahrzeugs, das eine Schließvorrichtung für die Haube mit einem Schließbolzen (35) und einem Gesperre aus Drehfalle (1) und Sperrklinke (7) umfasst, mit den Schritten, dass:
• die geöffnete Haube in Richtung geschlossene Stellung bewegt wird;
• durch dieses Bewegen der Haube der Schließbolzen (35) die Drehfalle (1) um ihre Achse (4) in Richtung ihrer Rastposition verschwenkt, bis die Drehfalle (1) auf einen Durchschlagsschutz, insbesondere einen Abfanghebel (11), auftrifft;
• nach diesem Auftreffen die Haube oder die Drehfalle (1) zusammen mit der Haube unter Einsatz eines Antriebs (19), insbesondere unter Einsatz eines elektrischen Antriebs (19), derart bewegt wird, dass der Haubenspalt zwischen Haube und Karosserie des Kraftfahrzeugs verringert wird;
• die Drehfalle (1) durch die Sperrklinke (7) verrastet wird;
• nach diesem Bewegen durch den Antrieb (19) der Antrieb (19) stoppt;
• das Verrasten der Drehfalle (1) im Anschluss an dieses Bewegen durch den Antrieb (19) erfolgt;
• nach dem Stoppen des Antriebs (19) mit zeitlicher Verzögerung die Drehfalle (1) durch die Sperrklinke (7) verrastet wird.

2. Verfahren nach Anspruch 1, **dadurch gekennzeichnet, dass** die Haube kraftbegrenzt durch den Antrieb (19) bewegt wird, bevor die Drehfalle (1) durch die Sperrklinke (7) verrastet wird.

3. Verfahren nach einem der vorhergehenden Ansprüche, **dadurch gekennzeichnet, dass** durch das Bewegen der Drehfalle (1) mittels des Antriebs (19) der Haubenspalt von 12 mm bis 30 mm um wenigstens 2 mm, vorzugsweise um wenigstens 5 mm verringert wird und/ oder durch das Bewegen der Drehfalle (1) mittels des Antriebs der Haubenspalt auf bis zu 10 mm, vorzugsweise auf bis zu 8 mm verringert wird.

4. Verfahren nach einem der beiden vorhergehenden Ansprüche, **dadurch gekennzeichnet, dass** die Kraft für das Bewegen der Haube oder für das Bewegen der Drehfalle (1) zusammen mit der Haube unter Einsatz des Antriebs (19) ausschließlich auf Schwerkraft beruht.

5. Verfahren nach einem der vorhergehenden Ansprüche, **dadurch gekennzeichnet, dass** die zeitliche Verzögerung wenigstens eine halbe Sekunde oder wenigstens eine Sekunde beträgt.

6. Verfahren nach dem vorhergehenden Anspruch, **dadurch gekennzeichnet, dass** nach der zeitlichen Verzögerung der Haubenspalt unter Einsatz des Antriebs (19) verkleinert wird und zwar vorzugsweise um 0,5 bis 2 mm, bevor die Drehfalle (1) verrastet wird und/ oder vorzugsweise kraftbegrenzt.

7. Verfahren nach einem der vorhergehenden Ansprüche, **dadurch gekennzeichnet, dass** der Lastarm (3) der Drehfalle (1) auf den Durchschlagsschutz (11) auftrifft.

8. Verfahren nach einem der vorhergehenden Ansprüche, **dadurch gekennzeichnet, dass** der Abfanghebel (11) im Anschluss an das Verrasten der Drehfalle (1) durch die Sperrklinke (7) aus seiner abfangenden Position heraus geschwenkt wird und zwar insbesondere unter Einsatz des Antriebs (19).

9. Verfahren nach einem der vorhergehenden Ansprüche, **dadurch gekennzeichnet, dass** im Anschluss an das Herausbewegen des Abfanghebels (11) aus seiner abfangenden Position die Drehfalle (1) durch den Antrieb (19) derart bewegt wird, dass der Haubenspalt weiter verringert wird und zwar vorzugsweise um wenigstens 3 mm, besonders bevorzugt um wenigstens 5 mm.

10. Verfahren nach dem vorhergehenden Anspruch, **dadurch gekennzeichnet, dass** im Anschluss an das Herausbewegen des Abfanghebels (11) aus seiner abfangenden Position die Drehfalle (1) durch den Antrieb (19) nicht kraftbegrenzt bewegt wird.

## Claims

1. Procedure for closure of a hood of a motor vehicle comprising a closing device for the hood with a locking bolt (35) and a locking mechanism comprising a catch (1) and a pawl (7) with the steps that:
• the open hood is moved in the direction of the closed position.
• by means of this movement of the hood of the locking bolt (35) the catch (1) is pivoted around its axis (4) in the direction of its ratchet position until the catch (1) impacts on an impact absorber, in particular a retention lever (11);
• after this impacting the hood or the catch (1) together with the hood is moved such that the hood gap between the hood and the chassis of the motor vehicle is reduced with use of a drive (19), in particular using an electrical drive (19);
• the catch (1) is ratcheted by the pawl (7);
• the drive (19) stops after this movement by the drive (19);
• ratcheting of the catch (1) occurs following this movement by the drive (19);
• after stoppage of the drive (19) with a time delay the catch (1) is ratcheted by the pawl (7).

2. Procedure according to claim 1, **characterized in that** the hood is moved by the drive (19) in a force-limited manner before the catch (1) is ratcheted by the pawl (7).

3. Procedure according to one of the previous claims, **characterized in that** the hood gap of 12 mm to 30 mm is reduced by at least 2 mm, preferably by at least 5 mm by movement of the catch (1) using the drive (19) and/or by moving the catch (1) using the drive of the hood gap to up to 10 mm, preferably to up to 8 mm.

4. Procedure according to one of the two previous claims, **characterized in that** the force for the movement of the hood or for the movement of the catch (1) together with the hood with use of the drive (19) is solely based on gravity.

5. Procedure according to one of the previous claims, **characterized in that** the time delay is at least half a second or at least one second.

6. Procedure according to the previous claim, **characterized in that** after the time delay the hood gap is made smaller using the drive (19) and preferably by 0.5 to 2 mm, before the catch (1) is ratcheted and/or preferably force-limited.

7. Procedure according to one of the previous claims, **characterized in that** the load arm (3) of the catch (1) strikes the impact absorber (11).

8. Procedure according to one of the previous claims, **characterized in that** the retention lever (11) following ratcheting of the catch (1) is pivoted out of its retaining position by the pawl (7) and in particular with use of the drive (19).

9. Procedure according to one of the previous claims, **characterized in that** following the moving out of the retention lever (11) out of its retaining position the catch (1) is moved by the drive (19) in such a way that the hood gap is further reduced, preferably by at least 3 mm, of particular preference by at least 5 mm.

10. Procedure according to the previous claim, **characterized in that** following the movement of the retention lever (11) out of its retaining position the catch (1) is moved by the drive (19) in a non-force-limited manner.

## Revendications

1. Procédé pour la fermeture d'un capot de véhicule à moteur comprenant un dispositif de fermeture du capot avec un goujon de fermeture (35) et un mécanisme de verrouillage comprenant une pêne tournant (1) et un cliquet de verrouillage (7), passant par les étapes suivantes :
• Le capot ouvert est déplacé jusqu'en position fermée ;
• Du fait de ce déplacement du capot, le goujon de fermeture (35) fait pivoter le pêne tournant (1) autour de son axe (4) en direction de sa position d'enclenchement, jusqu'à ce que le pêne tournant (1) percute une protection anti-pénétration, en particulier une levier d'interception (11) ;
• Après cette percussion, le capot ou le pêne tournant (1) avec le capot est déplacé via la mise en oeuvre d'un entraînement (19), notamment via la mise en oeuvre d'un entraînement électrique (19), de sorte à réduire l'interstice entre le capot et la carrosserie du véhicule à moteur ;
• Le cliquet de verrouillage (7) fait encranter le pêne tournant (1) ;
• L'entraînement (19) stoppe après ce mouvement provoqué par l'entraînement (19) ;
• Le pêne tournant (1) encrante à la suite de ce mouvement provoqué par l'entraînement (19) ;
• Après l'arrêt temporisé de l'entraînement (19), le cliquet de de verrouillage (7) fait encranter le pêne tournant (1).

2. Procédé selon la revendication 1, **caractérisé en ce que** le capot est déplacé par l'entraînement (19) avec une force limitée, avant que le cliquet de verrouillage (7) fasse encranter le pêne tournant (1).

3. Procédé selon l'une des revendications précédentes, **caractérisé en ce qu'**en raison du déplacement du pêne tournant (1) au moyen de l'entraînement (19), l'interstice du capot entre 12 mm et 30 mm diminue d'au moins 2 mm, de préférence d'au moins 5 mm et/ou que grâce au déplacement du pêne tournant (1) au moyen de l'entraînement l'interstice du capot est ramené à 10 mm, de préférence à 8 mm.

4. Procédé selon l'une deux revendications précédentes, **caractérisé en ce que** la force de déplacement du capot ou de déplacement du pêne tournant (1) conjointement au capot avec mise en oeuvre de l'entraînement (19) repose exclusivement sur la pesanteur.

5. Procédé selon l'une des revendications précédentes, **caractérisé en ce que** la temporisation est d'au moins une demi-seconde ou d'au moins une seconde.

6. Procédé selon la revendication précédente, **caractérisé en ce qu'**après la temporisation, l'interstice du capot diminue avec mise en oeuvre de l'entraînement (19), à savoir de préférence d'un quantum compris entre 0,5 et 2 mm avant que le pêne tournant (1) encrante et/ou de préférence avec limitation de force.

7. Procédé selon l'une des revendications précédentes, **caractérisé en ce que** le bras de charge (3) du pêne tournant (1) percute la protection anti-pénétration (11).

8. Procédé selon l'une des revendications précédentes, **caractérisé en ce que** le levier d'interception (11) - après que le cliquet de verrouillage (7) a fait encranter le pêne tournant (1) - pivote pour quitter sa position d'interception, à savoir notamment avec mise en oeuvre de l'entraînement (19).

9. Procédé selon l'une des revendications précédentes, **caractérisé en ce qu'**après que le levier d'interception (11) s'est déplacé pour quitter sa position d'interception, le pêne tournant (1) est déplacé par l'entraînement (19) de sorte que l'interstice du capot continue de diminuer, à savoir de préférence d'au moins 3 mm et de manière particulièrement préférentielle d'au moins 5 mm.

10. Procédé selon la revendication précédente, **caractérisé en ce qu'**après que le levier d'interception (11) à quitté sa position d'interception, le pêne tournant (1) est déplacé par l'entraînement (19) sans limitation de force.
